# EUROPEAN PATENT APPLICATION

(11) **EP 2 431 219 A2**
(43) Date of publication of application: **21.03.2012**
(21) Application number: 11181023.0
(22) Date of filing: 13.09.2011
(51) Int. Cl.: B60N 2/28

(54) **Base for infant seat for automobiles**

(30) Priority: 16.09.2010 ES 201031385
(71) Applicant: Play, S.A., 08184 Palau-Solità I Plegamans (ES)
(72) Inventor: Jane Stopp, Joaquin, 08184 Palau de Plegamans (ES)
(74) Representative: Ponti Sales, Adelaida

(57) **Abstract**

The base (1) for an infant seat for automobiles comprises means (2) for fastening it to the automobile seat and means (5) for engaging it to the infant seat (7), and it is characterised in that said engaging means to the infant seat (7) comprises a pair of rods (5) that can be engaged to hooks (6) provided at the lower part of the infant seat (7).

It permit the base structure to be narrower than the conventional bases, occupying a reduced space on the automobile seat when the infant seat is not used.

## Description

The present invention refers to a base for an infant seat for automobiles, which is used to permit the fixation of the infant seat to said base, which is fastened to the vehicle seat.

### BACKGROUND OF THE INVENTION

The children travelling in automobiles must use security infant seats suitable for their weight and age.

These security infant seats are classified according to the weight of the child. Therefore, the seats classified as 0+ according to ECE R44/04 standard are suitable for newborn children up to a weight of 13 kg. It must be pointed out that the present invention refers to these seats of group 0+.

These seats or carrycots of group 0+ are usually used also in infant strollers, so that the position of the seat is changed almost every day, between the automobile and the stroller. Consequently, it is necessary for the fastening of the seat in the automobile and the stroller to be as easiest as possible.

To make the fastening to the automobile seat easier bases were devised that are placed on the automobile seat and comprising means to fix it to the automobile seat and means for engaging it to the security infant seat.

The main drawback of these currently known bases is that its width is large, because they include engaging means, e.g. hooks, requiring to be mounted along the whole width of the base, to provide enough stability to the engagement. Therefore, the base structure must have a width that matches to the width of the infant seat.

The dimensions of the currently known bases are a drawback when the automobile is used with no infant seat, because the space available for the adjacent place, occupied by an adult, is limited.

One example of this kind of base is disclosed e.g. in the patent application EP 1 997 669 A, in the name of the present applicant.

### DESCRIPTION OF THE INVENTION

With the base of the invention said drawbacks can be solved, presenting other advantages that will be described.

The base for an infant seat for automobiles of the present invention comprises means for fastening it to the automobile seat and means for engaging it to the infant seat, and it is characterised in that said means for engaging it to the infant seat comprises a pair of rods, that are engaged to hooks provided at the lower part of the infant seat.

Advantageously, said rods laterally protrude from said base, are transversally placed on said base and are parallel to each other.

According to a preferred embodiment, said rods have deviation portions near to their ends.

Preferably, said fastening means to the automobile seat are a pair of hooks.

With the base of the present invention it is obtained a reduced width, in comparison with the conventional bases, so that it occupies inside the automobile a reduced space when they are not used with the infant seat.

Thanks to the presence of the rods it is not necessary the width of the base structure to match with the width of the infant seat, but it can be narrower, so that it does not occupy substantially the space of the adjacent place in the automobile.

### BRIEF DESCRIPTION OF THE DRAWINGS

For a better understanding of what has been described some drawings are attached in which, diagrammatically and only as a non-limitative example, a practical embodiment is shown.
Fig. 1 is a perspective view of the base for an infant seat for automobiles of the present invention; and
Fig. 2 is a side elevation view of an infant seat for automobiles engaged to the base of the present invention.

### DESCRIPTION OF A PREFERRED EMBODIMENT

As it can be seen from the figures, the base of the present invention is formed by a structure with a plurality of bars, indicated generally by reference 1.

Said base comprises at its rear part a pair of hooks 2 for its fixation to the automobile seat, system usually known as Isofix.

The position of said hooks 2 with respect to the structure of the base 1 can be regulated by a rack 3 and a ratchet 4.

According to the invention, the base 1 comprises a pair of rods 5 for its engagement to complementary hooks 6 provided on an infant seat 7.

These rods 5 are transversally placed with respect to the base 1 and are parallel to each other.

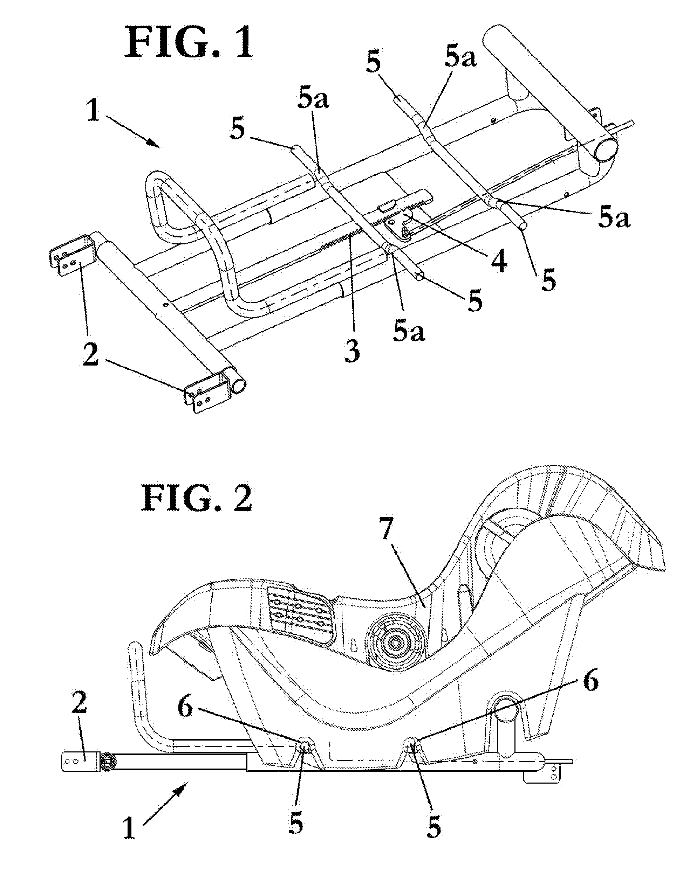

As it can be seen from Fig. 1, besides the hooks 2 that are placed at the intersection between the backrest and the seat portion of the automobile seat, only the ends of the rods 5 protrude with respect to the width of the base 1.

Therefore, the structure of the base 1 can be narrower than in the conventional bases, as stated previously.

Said rods 5 comprise deviation portions 5a near their ends, to make easier their fixation to the structure of the base 1.

The engagement between the base 1 and the infant seat 7 is very simple, because the infant seat 7 just must be placed on the base 1, matching the position of the hooks 6 with the rods 5 and pressing downwardly.

To remove the infant seat 7, the hooks 6 must be released by a conventional mechanism that does not form part of the present invention and, therefore, is not described in detail.

Even though reference is made to a specific embodiment of the invention, it is clear for a person skilled in the art that the described base is susceptible of numerous variations and modifications, and that all the details cited can be substituted by other technically equivalent ones, without departing from the scope of protection defined by the attached claims.

## Claims

1. Base (1) for an infant seat for automobiles comprising means (2) for fastening it to the automobile seat and means (5) for engaging it to the infant seat (7), **characterised in that** said engaging means to the infant seat (7) comprises a pair of rods (5) that can be engaged to hooks (6) provided at the lower part of the infant seat (7).

2. Base (1) according to claim 1, wherein said rods (5) laterally protrude from said base (1).

3. Base (1) according to claim 1 or 2, wherein said rods (5) are transversally placed in said base (1) and are parallel to each other.

4. Base (1) according to anyone of the previous claims, wherein said rods (5) have deviation portions (5a) near their ends.

5. Base (1) according to claim 1, wherein said fastening means to the automobile seat are a pair of hooks (2).
